# EUROPÄISCHE PATENTANMELDUNG

(11) **EP 3 413 443 A1**
(43) Veröffentlichungstag der Anmeldung: **12.12.2018**
(21) Anmeldenummer: 18177087.6
(22) Anmeldetag: 11.06.2018
(51) Int. Cl.: H02K 5/22, H01R 12/70, H02K 11/33

(54) **STATOR-ANSCHLUSSKASTEN-EINHEIT FÜR EINE ELEKTRISCH ANGETRIEBENE UMWÄLZPUMPE**

(30) Priorität: 09.06.2017 DE 102017112810
(71) Anmelder: Hefei Xinhu Canned Motor Pump Co., Ltd., Anhui Province 230088 (CN)
(72) Erfinder: Han, Yuanping, Hefei, 230088 (CN); Han, Zongxi, Hefei, 230088 (CN); ZHANG, Li, Hefei, 230088 (CN)
(74) Vertreter: Tarvenkorn, Oliver

(57) **Zusammenfassung**

Stator-Anschlusskasten-Einheit (100) für eine elektrisch angetriebene Umwälzpumpe, umfasst:
- ein Statorgehäuse (20), das eine Rotoraufnahmeausnehmung (24) aufweist, und mit elektrischen Anschlusselementen (22) für wenigstens zwei im Statorgehäuse (20) angeordnete, elektromagnetische Spulen (23) versehen ist;
- einen Anschlusskasten (10) mit wenigstens einer elektronischen Steuerungseinheit (40) und/oder mit elektrischen Anschlusselementen zur Verbindung der Stator-Anschlusskasten-Einheit (100) mit einer Stromversorgungseinheit.

Mehrere elektrisch leitende Steckkontaktelemente (31), die zur Herstellung einer elektrischen Steckverbindung zwischen der im Anschlusskasten (10) angeordneten elektronischen Steuerungseinheit und den Anschlusselementen (22) im Statorgehäuse (20) benötigt werden, sind mittels wenigstens eines elektrisch isolierenden Brückenelements (32) in einer gabelförmigen Konfiguration zu einem Steckverbinderelement (30) zusammengefasst und stehen beidseitig von dem Brückenelement (32) ab. Das Steckverbinderelement (30) ist zwischen dem Statorgehäuse (20) und der elektronischen Steuerungseinheit im Anschlusskasten (10) einsetzbar.

## Beschreibung

Die Erfindung betrifft eine Stator-Anschlusskasten-Einheit für eine elektrisch angetriebene Umwälzpumpe mit den Merkmalen des Oberbegriffs des Anspruchs 1.

Die EP 1133012 A2 beschreibt einen steckbaren Klemmenkasten für eine Heizungspumpe. Der elektrische Anschluss der Pumpe erfolgt über den Klemmenkasten, der mit einem Statorgehäuse eines Pumpenmotors verbunden ist. Die Stromversorgungsleitungen, die von einem Stromverteilernetz oder einer übergeordneten Steuerungs- oder Regelungseinheit kommen, beispielsweise der Heizungssteuerung, werden mit dem Klemmenkasten verbunden. Der Klemmenkasten enthält in seinem Inneren eine auf einer Leiterplatte aufgebaute elektronische Schaltungseinheit sowie gegebenenfalls zusätzliche Anzeige- und Bedienungsmittel an der Außenseite. Der Klemmenkasten enthält in seinem Bodenbereich weiterhin elektrische Kontaktelemente in Form von metallischen Stäben, die in den Kunststoff des Bodens des Klemmenkastens eingegossen sind. An der Innenseite des Klemmenkastens wird die Leiterplatte der elektronischen Steuerungseinheit auf die dortigen Enden der Kontaktelemente aufgesteckt. Die anderen Enden der Kontaktelemente ragen vom Boden des Klemmenkastens aus nach außen und können in passende elektrische Anschlusselemente eingesteckt werden, welche sich an einer Öffnung an der Außenseite des Statorgehäuses befinden.

Mit dem Aufsetzen des Klemmenkastens auf das Statorgehäuse werden somit die elektrischen Verbindungen zwischen der Steuerungseinheit im Klemmenkasten und den magnetischen Entwicklungen im Statorgehäuse hergestellt. Der Stator ist insbesondere Teil einer Spaltrohrpumpe und enthält mehrere elektrische Spulen, die mit den Anschlussklemmen verbunden sind. Somit kann das magnetische Feld über die im Anschlusskasten vorhandene elektronische Steuerungseinrichtung erzeugt und wieder aufgehoben werden. Statorgehäuse und Klemmenkasten sind dabei insbesondere auch mechanisch zu einer Einheit verbunden, sodass die externen elektrischen Versorgungsleitungen bei der Montage einer solchermaßen ausgerüsteten Umwälzpumpe für Heizung und Brauchwassererwärmung lediglich bis zum Anschlusskasten geführt werden müssen, wofür an dessen Seiten zusätzlich geeignete Kupplungen oder Stecker ausgebildet sind.

Die gesamte Einheit aus Statorgehäuse und Anschlusskasten kann somit leicht vormontiert werden. Der Anschlusskasten kann aber auch problemlos abgenommen werden, wenn beispielsweise die Platzverhältnisse am Montageort sehr eng sind. Nachdem die Pumpe an das Rohrleitungsnetz angeschlossen worden ist und die elektrischen Anschlussleitungen mit dem Anschlusskasten verbunden worden sind, kann der Anschlusskasten wieder auf das Statorgehäuse aufgesetzt werden. Durch Abdichtung mittels einer endlosen Dichtung, welche den Bereich der Anschlusselemente umschließt, wird das Eindringen von Schmutz und Feuchtigkeit in den Bereich der elektrischen Anschlusselemente verhindert. Die steckbare Verbindung des Anschlusskastens über Steckkontaktelemente, die in Querschnitt und Anordnung genau zu den komplementären Aufnahmen am Stator passen, hat den Vorteil einer einfachen und zuverlässigen Montage.

Als nachteilig verbleibt jedoch, dass die Steckkontaktelemente fest in das Bodenteil des Anschlusskastens eingebettet und daher nicht austauschbar sind.

Werden Steckkontaktelemente bei der Montage verbogen oder gar abgebrochen, muss der komplette Anschlusskasten ausgetauscht werden, zumindest aber das Bodenteil mit den eingebetteten Steckkontaktelementen. Zu diesem Montagezeitpunkt ist der Anschlusskasten schon vollständig bestückt und fertig aufgebaut.

Ein weiterer Nachteil kann entstehen, wenn der gleiche Anschlusskasten mit mehreren Statorgehäusen verbunden werden soll. In diesem Fall müssen sämtliche Anschlusskästen mit sämtlichen Anschlusselementen in den verschiedenen Statorgehäusen abgestimmt werden, was auch bedeutet, dass Anzahl und Querschnitt der Steckkontaktelemente stets auf die maximale Strombeanspruchung ausgelegt sein müssen, also meist von den stärksten Pumpentypen innerhalb einer Baureihe abhängen. Kleinere Pumpen mit schwächeren Motor müssen also Aufnahmeelemente für die Steckkontakte besitzen, die unter dem Gesichtspunkt der Strombelastbarkeit eigentlich überdimensioniert sind, die aber erforderlich sind, um die Kompatibilität innerhalb der Baureihe zu erhalten.

Schließlich kann ein Nachteil auch unter Fertigungsaspekten entstehen. Das Einbetten von metallischen Teilen beim Spritzgießen ist zwar nach dem Stand der Technik gut beherrschbar, jedoch kann der bei den Prozessen regelmäßig anfallende Ausschuss nicht durch einfache Zerkleinerung recycelt werden, da die metallischen Anteile zunächst daraus entfernt werden müssen.

Die Aufgabe der vorliegenden Erfindung liegt somit darin, Fertigung und Montage der Stator-Anschlusskasten-Einheit wirtschaftlicher zu machen, gerade unter dem Aspekt des anfallenden Ausschusses, und außerdem darin, die Verbindung von verschiedenen Anschlusskästen und Pumpen einfacher konfigurieren zu können.

Diese Aufgabe wird durch eine Stator-Anschlusskasten-Einheit mit den Merkmalen des Anspruchs 1 gelöst.

Erfindungsgemäß sind die Steckkontaktelemente über wenigstens ein Brückenelement zu einem Steckverbinderelement zusammengefasst, sodass sie eine gabelförmige Konfiguration besitzen, welche zu beiden Seiten des isolierenden Brückenelements Gabelzinken aufweist. Bei dem so gebildeten Steckverbinderelement ist die eine Seite der Steckkontaktelemente so konfiguriert, dass sie mit entsprechenden Ausnehmungen im Anschlusskasten und den Aufnahmeklemmen darin zusammenwirkt, und mit der anderen Seite so, dass sie in Aufnahmen im Statorgehäuse einsetzbar ist.

In einer einfachen Ausführungsform bestehen die Steckkontaktelemente jeweils aus Streifen aus Metallblech und erstrecken sich geradlinig durch das Brückenelement hindurch. Querschnitt und Abstand der hier auch als Gabelzinken bezeichneten Enden der Steckkontaktelemente sind in diesem speziellen Fall auf Seiten des Anschlusskastens genauso wie am Statorgehäuse.

Möglich ist aber auch, als Steckkontaktelemente metallische Teile zu verwenden, deren Querschnitt sich zwischen den beiden Enden ändert und/oder die in ihrem Verlauf ein- oder mehrfach abgewinkelt sind, sodass der Abstand der Steckkontaktelemente am Statorgehäuse anders sein kann als am Anschlusskasten. Hierdurch entsteht eine große Variabilität, sodass über die sehr preiswert herstellbaren, kleinen Steckverbinderelemente nach der Erfindung unterschiedliche Statorgehäuse mit dem gleichen Anschlusskasten verbunden werden können bzw. umgekehrt, indem lediglich das Steckverbinderelement ausgetauscht wird.

Das Steckverbinderelement besteht vorzugsweise aus wenigstens zwei, insbesondere drei gestanzten Metallstreifen, die über ein sehr kleines Kunststoffteil mit geringem Schussgewicht als Brückenelement miteinander verbunden sind. Es wird somit für das nach der Erfindung zusätzlich vorgesehene Steckverbinderelement kaum zusätzliche Masse an Kunststoff benötigt. Das erfindungsgemäße Steckverbinderelement benötigt lediglich Spritzgießwerkzeuge mit einer kleinen Kavität, sodass entweder eine Vielzahl von Kavitäten in einem Spritzgießwerkzeug angeordnet werden kann, falls eine größere Spritzgießmaschine zur Verfügung steht, oder dass die Fertigung ebenso auf einer kleinen Spritzgießmaschine möglich ist.

Anfallende Fehlteile des Bodenteils des Anschlusskastens können sehr einfach sortenrein aufbereitet und in den Produktionsprozess zurückgebracht werden, da sie keine Metallanteile für die elektrischen Kontakte zu enthalten brauchen. Die Fertigung ist zudem erleichtert, da keine Zuführeinrichtung erforderlich ist, um die metallischen Steckkontaktelemente im Spritzgießwerkzeug zu positionieren und da im Produktionsprozess der Schritt des Einsetzens der zu umspritzenden Steckkontaktelemente in das Spritzgießwerkzeug entfallen kann.

Bei der Montage ergibt sich nach der Erfindung zudem der Vorteil, dass beim Zusammenstecken möglicherweise verbogene Enden der Steckkontaktelemente nicht gerichtet werden müssen, sondern dass einfach ein neuer, preiswert herstellbarer Steckverbinder eingesetzt werden kann. Anders als beim Anschlusskasten nach dem Stand der Technik, der zum Zeitpunkt der Verbindung mit dem Statorgehäuse bereits vollständig vormontiert ist und der neben der elektronischen Steuerungseinheit auch alle Stecker oder Kupplungen für die Verbindung mit übergeordneten Einheiten besitzt, der also bei der Endmontage schon zu wertvoll ist, um ausgesondert zu werden, kann das sehr preiswerte erfindungsgemäße Steckverbinderelement einfach entsorgt werden, wenn es beschädigt worden sein sollte.

Die Erfindung wird nachfolgend mit Bezug auf die Zeichnungen näher erläutert. Die Figuren zeigen jeweils in perspektivischer Darstellung:
- Figur 1: eine erfindungsgemäße Stator-Anschlusskasten-Einheit in Ex-plosionsdarstellung;
- Figur 2: ein Statorgehäuse einer Umwälzpumpe mit einem Steckverbinderelement vor der Montage;
- Figur 3: eine Stator-Anschlusskasten-Einheit mit Blick in den offenen Anschlusskasten;
- Figur 4: ein Steckverbinderelement gemäß einer zweiten Ausführungsform;
- Figur 5: eine Stator-Anschlusskasten-Einheit mit dem Steckverbinderelement gemäß der zweiten Ausführungsform;
- Figur 6: ein vergrößertes Detail aus Figur 5 und
- Figur 7: eine fertig montierte Umwälzpumpe mit einer Stator-Anschlusskasten-Einheit.

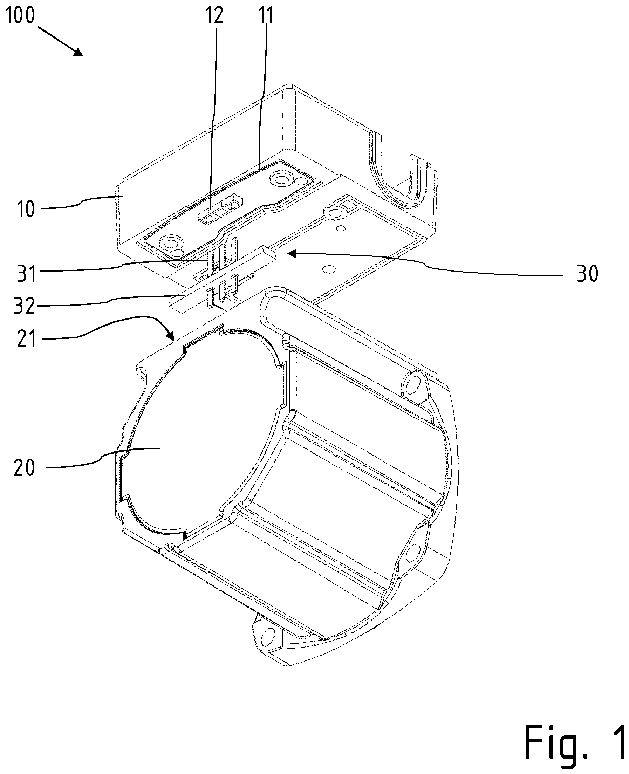

Figur 1 zeigt eine Stator-Anschlusskasten-Einheit 100 in einer Grundkonfiguration, welche als wesentliche Elemente umfasst:
- einen Anschlusskasten 10, von dem hier nur das Bodenteil gezeigt ist,
- ein Steckverbinderelement 30, welche über ein Brückenelement 32 drei metallische Steckkontaktelemente 31 in einer gabelförmigen Konfiguration zusammenfasst und
- ein Statorgehäuse 20.

Das Statorgehäuse 20 besitzt an einer Seite eine abgeflachte Montagefläche 21. An der Unterseite des Anschlusskastens 10 ist eine Montagezone 11 ausgebildet, die neben Durchführungsausnehmungen für Verschraubungen drei nebeneinander angeordnete Ausnehmungen 12 aufweist, in die die Gabelzinken 31 des Steckverbinders 30 einsetzbar sind.

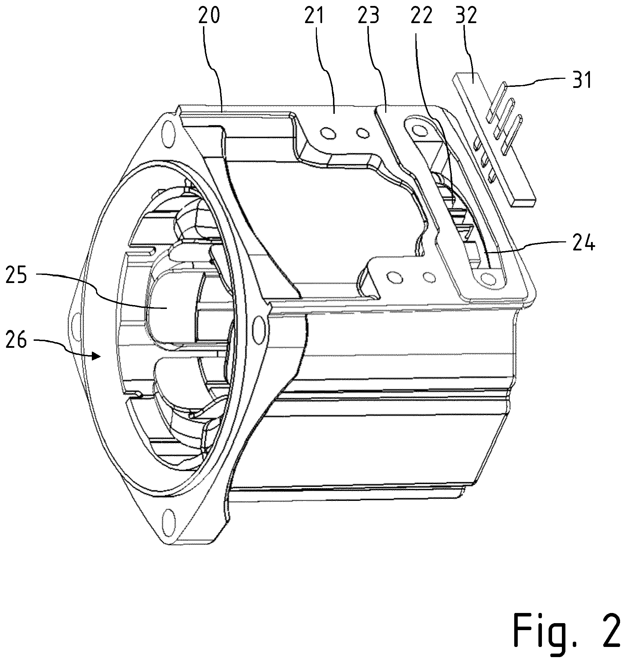

Figur 2 zeigt den Beginn der Montage, der bei dem hier dargestellten Ausführungsbeispiel beim Statorgehäuse 20 beginnt, jedoch ist auch die umgekehrte Montage möglich, bei der das Steckverbinderelement 30 zunächst mit dem Anschlusskasten verbunden wird.

Figur 2 zeigt den Blick von schräg oben auf das Statorgehäuse 20. An der linken Seite des Statorgehäuses 20 ist eine Rotorausnehmung 26 erkennbar, in welcher mehrere Magnetspulen 25 angeordnet sind. Auf der Anschlussfläche 21 liegt eine Dichtung 23 auf, die von ihrer Form her passend zur Kontur der Anschlusszone 11 an der Unterseite des Anschlusskastens 10 ausgebildet ist. Die Dichtung 23 umgibt eine Öffnung 24 an der Außenseite des Statorgehäuses 20, in welcher insgesamt drei Anschlussklemmen 22 nebeneinander angeordnet sind. Bei dem hier dargestellten Ausführungsbeispiel des Steckverbinderelements 30 ist die Brücke 32 von ihrem Außenumfang so gestaltet, dass sie vollständig innerhalb der Öffnung 24 aufgenommen werden kann und nicht über die Montagefläche 21 hinaus nach oben ragt.

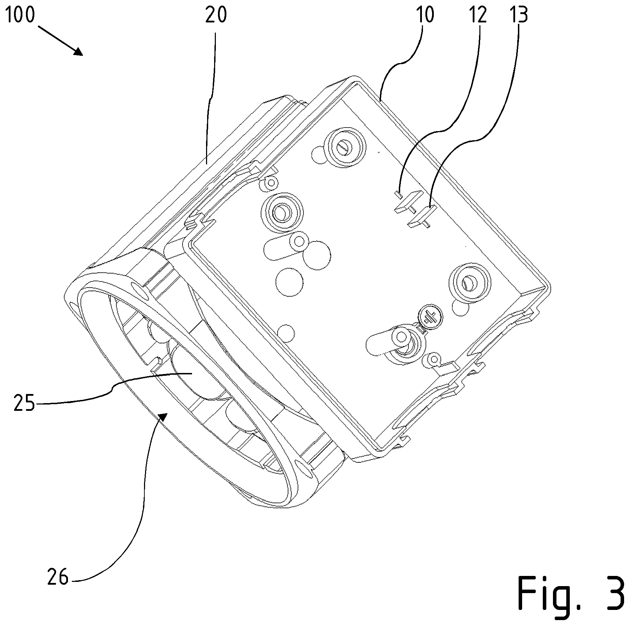

Figur 3 zeigt die Stator-Anschlusskasten-Einheit 100 kurz vor dem Aufsetzen des Anschlusskastens 10. Dieser ist bereits lagerichtig gegenüber dem Statorgehäuse 20 ausgerichtet, jedoch treten die Enden der Steckkontaktelemente 31 noch nicht durch die dafür vorgesehenen Ausnehmungen 12 im Boden. Zwischen den Ausnehmungen 12 ist jeweils eine plattenförmige Rippe vorgesehen. Hierbei handelt es sich um Führungsvorsprünge 13, die der lagerichtigen Positionierung der Leiterplatte 40 der Steuerungselektronik dienen. Gegenüber dem Verlauf der linear hintereinander angeordneten Ausnehmungen 12 sind die Führungsvorsprünge 13 quer dazu angeordnet.

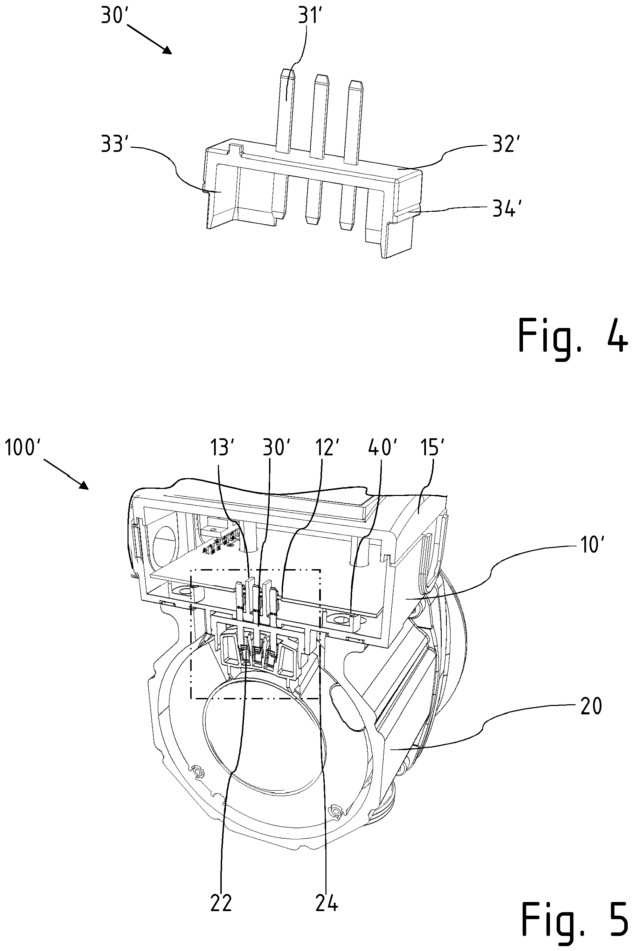

Figur 4 zeigt ein zweites Ausführungsbeispiel eines Steckverbinderelements 30'. Auch bei diesem sind drei lineare, metallische Steckkontaktelemente 31' über ein Brückenelement 32' aus Kunststoff miteinander verbunden. Unterhalb des Brückenelements 32' schließt sich beidseitig je ein Einführkragen 33' an, der die Zentrierung beim Einschieben des Steckverbinderelements 30' in die entsprechende Ausnehmung 24 an der Außenseite des Statorgehäuses 20 erleichtert. Außen am Einführkragen 33' ist ein Rastvorsprung 34' ausgebildet.

Eine Stator-Anschlusskasten-Einheit 100', welche das in Figur 4 dargestellten Steckverbinderelement 30' enthält, ist in Figur 5 in einer Schnittansicht dargestellt. Der Anschlusskasten 10' ist hier geschlossen, d. h. mit Teilen eines aufgesetzten Deckelelements 15', dargestellt. Im Inneren des Anschlusskastens 10' ist eine auf einer Leiterplatte 40' aufgebaute elektronische Steuerungseinheit eingesetzt. Die Führungsvorsprünge 13' ragen durch Ausnehmungen in der Leiterplatte 40'.

In der Öffnung 24 im Statorgehäuse 20 ist eine elektrische Anschlussgruppe 25 angeordnet, die drei Aufnahmeklemmen 22 aufweist, in welche die Steckkontaktelemente des Steckverbinderelements 30' einsetzbar sind.

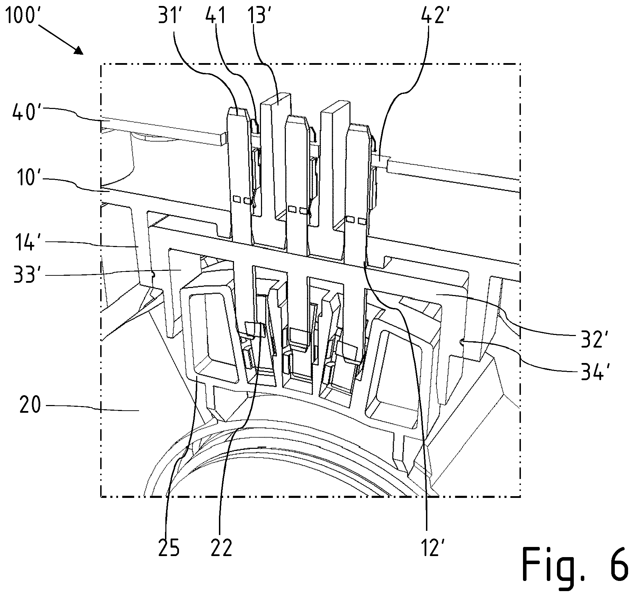

Der in Figur 5 gekennzeichnete Ausschnitt ist in Figur 6 vergrößert dargestellt. Hierin ist die Anschlusseinheit 25 des Statorgehäuses 20 deutlich erkennbar. Diese besteht aus Kunststoff und besitzt drei Fächer im Zentrum, in denen jeweils eine metallische Aufnahmeklemme 22 angeordnet ist, die jeweils mit einer elektrischen Leitung verbunden ist, die zu den Magnetspulen führt oder die als Erdleiter direkt mit dem metallischen Statorgehäuse 20 verbunden ist.

Ebenso sind an der Leiterplatte der elektronischen Steuerungseinheit 40' Aufnahmeklemmen 41' angebracht. Die Enden der Steckkontaktelemente 31', die durch die Ausnehmungen 12' im Boden des Anschlusskastens 10' und durch die Ausnehmungen 43' in der Leiterplatte 40' ragen, greifen hierin ein. Damit ist eine sichere elektrische Verbindung für alle drei elektrischen Leiter hergestellt.

An der Unterseite des Bodens des Anschlusskastens 10' ist ein Kragen 14' angeformt. Das Brückenelement 32' liegt vollständig innerhalb dieses Kragens 14'. Mit seinen Innenflächen umgreift der Führungskragen 33' die Anschlusseinheit 25. Ein Rastvorsprung 34' am Steckverbinder 30' greift in eine Rastausnehmung am Kragen 14' ein, so dass der Steckverbinder 30' in einer definierten Lage am Anschlusskasten 10' gehalten wird.

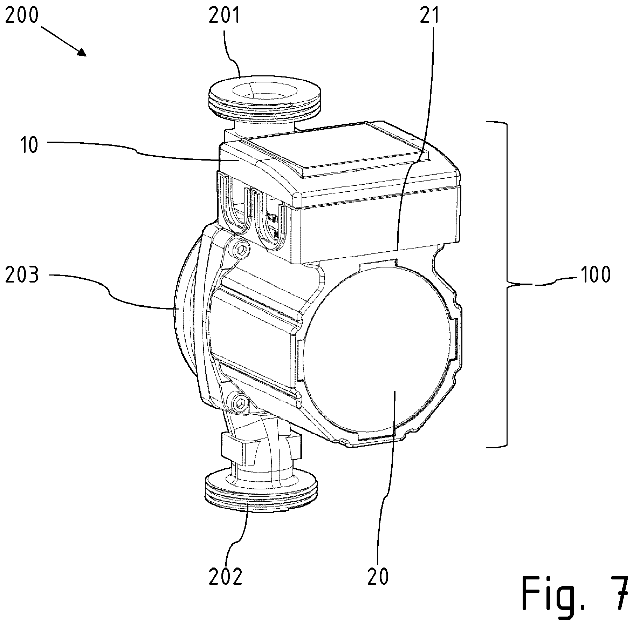

In Figur 7 ist eine vollständig aufgebaute, elektrisch angetriebene Umwälzpumpe 200 für Heizung und Brauchwasser dargestellt, die die zuvor beschriebene Stator-Anschlusskasten-Einheit 100 enthält. Als nicht sichtbare Teile besitzt die als Spaltrohrpumpe ausgebildete Umwälzpumpe 200 ein in die Rotorausnehmung 26 eingesetztes Spaltrohr und einen darin angeordneten Rotor mit einer Rotorwelle, Permanentmagneten und ein Pumpenrad. Ein Pumpengehäuse 203 besitzt zwei Anschlussstutzen 201, 202, zwischen denen ein Fließkanal ausgebildet ist, der sich zu einer Pumpenkammer erweitert, in welcher das Pumpenrad angeordnet ist. Anschlusskasten 10 und Statorgehäuse 20 liegen spaltfrei und gegeneinander abgedichtet an der Montagefläche 21 aufeinander und sind intern über das zwischengefügte Steckverbinderelement elektrisch miteinander verbunden.

## Patentansprüche

1. Stator-Anschlusskasten-Einheit (100; 100') für eine elektrisch angetriebene Umwälzpumpe (200), wenigstens umfassend:
- ein Statorgehäuse (20), das eine Rotoraufnahmeausnehmung (24) aufweist, und mit elektrischen Anschlusselementen (22) für wenigstens zwei im Statorgehäuse (20) angeordnete, elektromagnetische Spulen (23) versehen ist;
- einen Anschlusskasten (10, 10') mit wenigstens einer elektronischen Steuerungseinheit (40') und/oder mit elektrischen Anschlusselementen;
- mehrere zu einer Gruppe zusammengefasste, elektrisch leitende Steckkontaktelemente (31; 31') zur Herstellung einer elektrischen Steckverbindung zwischen den Anschlusselementen (22) im Statorgehäuse (20) und der im Anschlusskasten (10; 10') angeordneten elektronischen Steuerungseinheit (40') und/oder den elektrischen Anschlusselementen im Anschlusskasten (10; 10'),
**dadurch gekennzeichnet, dass** die Steckkontaktelemente (31; 31') mittels wenigstens eines elektrisch isolierenden Brückenelements (32, 32') in einer gabelförmigen Konfiguration zu einem zwischen dem Statorgehäuse (20) und dem Anschlusskasten (10; 10') einsetzbaren Steckverbinderelement (30; 30') zusammengefasst sind und beidseitig von dem Brückenelement (32, 32') abstehen.

2. Stator-Anschlusskasten-Einheit (100') nach Anspruch 1, **dadurch gekennzeichnet, dass** wenigstens auf einer Seite des Brückenelements (32') wenigstens ein Einführkragen (33') angeformt ist.

3. Stator-Anschlusskasten-Einheit (100') nach Anspruch 2, **dadurch gekennzeichnet, dass** an der Unterseite des Anschlusskastens (10') ein Kragen (14') angeformt ist, der das Brückenelement (32') und den Führungskragen (33') umgibt.

4. Stator-Anschlusskasten-Einheit (100') nach Anspruch 3, **dadurch gekennzeichnet, dass** zwischen dem Kragen (14') am Anschlusskasten (10') und dem Brückenelement (32') und/oder dessen Führungskragen (33') wenigstens eine Rastverbindung ausgebildet ist.

5. Stator-Anschlusskasten-Einheit (100; 100') nach einem der vorhergehenden Ansprüche, **dadurch gekennzeichnet, dass** im Boden des Anschlusskastens (10; 10') je Steckkontaktelement (31; 31') eine Durchführungsausnehmung (12) ausgebildet ist.

6. Stator-Anschlusskasten-Einheit (100; 100') nach einem der vorhergehenden Ansprüche, **dadurch gekennzeichnet, dass** am Boden im Inneren des Anschlusskastens (10; 10') Führungsvorsprünge (13; 13') angeformt sind, die in Führungsausnehmungen (42') der elektronischen Steuerungseinheit (40') eingreifen.

7. Stator-Anschlusskasten-Einheit (100; 100') nach Anspruch 6, **dadurch gekennzeichnet, dass** am Brückenelement (32; 32') drei Steckkontaktelemente (31; 31') vorgesehen sind und dass am Boden des Anschlusskastens (10; 10') zwei plattenförmige Führungsvorsprünge (13; 13') angeformt sind, die jeweils zwischen benachbarten Durchführungsausnehmungen (12) und senkrecht zum Boden angeordnet sind, wobei die Führungsvorsprünge (13; 13') quer zur Anordnung der Durchführungsausnehmungen (12) ausgerichtet sind.

8. Elektrisch angetriebene Umwälzpumpe (200) für Heizung und Brauchwasser, mit wenigstens:
- einer Stator-Anschlusskasten-Einheit (100; 100') nach einem der vorhergehenden Ansprüche,
- einem in die Rotorausnehmung (26) eingesetzten Spaltrohr;
- einem im Spaltrohr angeordneten Rotor mit einer Rotorwelle , Permanentmagneten und einem Pumpenrad;
- einem Pumpengehäuse (203) mit zwei Anschlussstutzen (201, 202), zwischen denen ein Fließkanal ausgebildet ist, der sich zu einer Pumpenkammer erweitert, in welcher das Pumpenrad angeordnet ist.
